# EUROPÄISCHE PATENTANMELDUNG

(11) **EP 2 105 680 A2**
(43) Veröffentlichungstag der Anmeldung: **30.09.2009**
(21) Anmeldenummer: 09003858.9
(22) Anmeldetag: 18.03.2009
(51) Int. Cl.: F24J 2/20, F24J 2/46, F24J 2/51

(54) **Solarkollektor**

(30) Priorität: 28.03.2008 DE 102008016101
(71) Anmelder: Robert Bosch GmbH, 70442 Stuttgart (DE)
(72) Erfinder: Clement, Uwe, 73114 Schlat (DE); Von Garnier, Kai, 73779 Deizisau (DE)

(57) **Zusammenfassung**

Die Erfindung betrifft einen Solarkollektorgrundkörper (2) und einen Solarkollektor (1) mit einem Solarkollektorgrundkörper (1), insbesondere ein Solarkollektorgrundkörper (2) für einen Solarflachkollektor (1), umfassend ein Solarkollektorgehäuse (3) und einen in dem Solarkollektorgehäuse (3) angeordneten Absorber (4), wobei der Absorber (4) von einem Solarfluid durchströmbar ist. Weiter betrifft die Erfindung ein Verfahren zur Herstellung eines Solarkollektors (1) mit einem Solarkollektorgehäuse (3) und einem darin angeordneten, durchströmbaren Absorber (4).

Es ist eine Aufgabe der Erfindung, einen Solarkollektorgrundkörper (2) sowie einen Solarkollektor (1) mit einem Solarkollektorgrundkörper (2) und ein Verfahren zur deren Herstellung zu schaffen, der die Nachteile gemäß dem Stand der Technik überwindet. Insbesondere ist es eine Aufgabe der Erfindung, einen Solarkollektorgrundkörper (2) und einen Solarkollektor (1) mit einem Solarkollektorgrundkörper (2) und ein Verfahren zu deren Herstellung zu schaffen, welche einen geringeren Materialaufwand und geringere Fertigungszeiten erfordern.

Gekennzeichnet ist der Solarkollektorgrundkörper (2) und der Solarkollektor (1) dadurch, dass der Absorber (4) zumindest teilweise integriert mit dem Solarkollektorgehäuse (3) ausgebildet ist. Gekennzeichnet ist das Verfahren dadurch, dass das Solarkollektorgehäuse (3) und zumindest ein Teil des Absorbers (4) durch Umformen als integriertes Bauteil hergestellt werden.

## Beschreibung

Die Erfindung betrifft einen Solarkollektorgrundkörper, insbesondere einen Solarkollektorgrundkörper für einen Solarflachkollektor, nach dem Oberbegriff des Patentanspruches 1. Weiter betrifft die Erfindung einen Solarkollektor, insbesondere einen Solarflachkollektor nach dem Oberbegriff des Patentanspruchs 7, sowie ein Verfahren zur Herstellung eines Solarkollektors nach dem Oberbegriff des Patentanspruchs 9.

Solarkollektoren, insbesondere Solarflachkollektoren sind allgemein bekannt. Derartige Solarkollektoren bestehen aus einem Solarkollektorgrundkörper, der ein Solarkollektorgehäuse und einen darin angeordneten Absorber aufweist. Der Absorber ist als vom Solarfluid durchströmbarer Fluidkanal oder entsprechend als Fluidkanalsystem ausgebildet. Das Fluidkanalsystem umfasst in herkömmlichen Ausführungsformen ein Rohr oder mehrere Rohre, welche an entsprechenden Halterungen eines Absorbergrundkörpers befestigt sind, beispielsweise an beschichteten Kupfer- oder Aluminiumblechen. Der Absorber wird separat gefertigt, in das Solarkollektorgehäuse, welches ebenfalls eine separate Baugruppe bildet, eingesetzt und daran befestigt. Dabei bildet der Absorber eine separate Baueinheit. Der Aufwand zur Herstellung eines derartigen Solarkollektors ist relativ hoch. Insbesondere sind der Materialaufwand und die Fertigungszeiten beträchtlich.

Der Erfindung liegt die Aufgabe zugrunde, einen Solarkollektorgrundkörper sowie einen Solarkollektor mit einem Solarkollektorgrundkörper zu schaffen, der die Nachteile gemäß dem Stand der Technik überwindet. Insbesondere ist es eine Aufgabe der Erfindung, einen Solarkollektorgrundkörper und einen Solarkollektor mit einem Solarkollektorgrundkörper zu schaffen, welche einen geringeren Materialaufwand und geringere Fertigungszeiten erfordern. Weiter liegt der Erfindung die Aufgabe zugrunde, ein verbessertes Herstellverfahren zur weniger aufwendigen Fertigung eines Solarkollektorgrundkörpers und eines Solarkollektors zu schaffen.

Erfindungsgemäß wird dies durch die Gegenstände mit den Merkmalen des Patentanspruches 1, des Patentanspruchs 7 und des Patentanspruchs 9 gelöst. Vorteilhafte Weiterbildungen sind den Unteransprüchen zu entnehmen.

Der erfindungsgemäße Solarkollektorgrundkörper ist dadurch gekennzeichnet, dass bei dem Solarkollektorgrundkörper, insbesondere dem Solarkollektorgrundkörper für einen Solarflachkollektor, umfassend ein Solarkollektorgehäuse und einen in dem Solarkollektorgehäuse angeordneten Absorber, wobei der Absorber von einem Solarfluid durchströmbar ist, vorgesehen ist, dass der Absorber zumindest teilweise integriert mit dem Solarkollektorgehäuse ausgebildet ist. Der Solarkollektorgrundkörper besteht im Wesentlichen aus dem Solarkollektorgehäuse und dem Absorber. Der Absorber ist ein Leitungssystem, welches von einem Solarfluid durchströmbar ist. Das Leitungssystem umfasst einen Fluidkanal oder mehrere Fluidkanäle. Das Solarkollektorgehäuse ist so ausgebildet, dass es den Absorber aufnimmt. Erfindungsgemäß sind das Solarkollektorgehäuse und zumindest ein Teil des Absorbers integriert, das heißt einteilig ausgebildet. Hierdurch muss der Absorber nicht mehr in einem eigenen Fertigungsschritt mit dem Solarkollektorgehäuse befestigt werden. Durch die integrierte Fertigungsweise sind nicht mehr zwei separate Schritte zur Fertigung eines Absorbers und eines Solarkollektorgehäuses erforderlich.

In einer Ausführungsform des erfindungsgemäßen Solarkollektorgrundkörpers ist vorgesehen, dass das Solarkollektorgehäuse und zumindest der integriert ausgebildete Teil des Absorbers mittels eines Urformverfahrens hergestellt sind. Ein bevorzugtes Urformverfahren stellt ein Schäumverfahren, insbesondere ein Kunststoffschäumverfahren wie das Polyurethanschäumverfahren dar. Auf diese Weise lassen sich Absorber und Gehäuse in einem Fertigungsschritt auf einfache Weise integriert miteinander ausbilden.

Bei einer weiteren Ausführungsform ist vorgesehen, dass der mit dem Solarkollektorgehäuse integriert ausgebildete Teil des Absorbers als mindestens ein Fluidkanal mit zumindest einer Umfangsöffnung ausgeformt ist, so dass dieser als umfänglich zumindest teilweise offener Fluidkanal ausgebildet ist. Zur urformtechnischen oder gießtechnischen Optimierung der integrierten Fertigungsweise weist der Absorber eine Struktur auf, die in eine Entnahmeöffnung aus einem Werkzeug geöffnet ist, das heißt mit einer umfänglichen Öffnung. Der so gebildete Fluidkanal ist umfänglich nicht geschlossen, sondern teilweise geöffnet. An der Verbindung zum Solarkollektorgehäuse ist der Fluidkanal geschlossen ausgebildet.

In noch einer weiteren Ausführungsform der vorliegenden Erfindung ist vorgesehen, dass die Umfangsöffnung etwa bündig in einer Ebene an eine Wandung des Fluidkanals unter Bildung von einer Auflagefläche angrenzt, so dass der Fluidkanal mittels einer ebenen Abdeckplatte umfänglich verschließbar ist. Um den Fluidkanal umfänglich abzudichten, ist die Umfangsöffnung so ausgebildet, dass die Öffnung mittels einer Platte oder einem anderen einfachen Bauteil verschlossen werden kann. Bevorzugt wird auf die Auflagefläche ein adhäsives Mittel wie ein Kleber aufgebracht, um die Platte mit dem Fluidkanal fest zu verbinden und den Fluidkanal solarfluiddicht abzudichten.

Ein Ausführungsbeispiel des Solarkollektorgrundkörpers sieht vor, dass der Solarkollektorgrundkörper etwa becherförmig mit einem Gehäuseboden, einer Gehäusewandung und einem von dem Gehäuseboden und der Gehäusewandung aufgespannten Innenraum ausgebildet ist.

Ein weiteres Ausführungsbeispiel sieht vor, dass der Absorber in dem Gehäuseinnenraum ausgebildet ist. Der Absorber ist so in dem Innenraum angeordnet, dass dieser nicht aus dem Innenraum über die Gehäusewandung herausragt. Bevorzugt ist der Gehäuseboden in Form einer quaderförmigen Platte und einer umlaufenden, rahmenartigen Gehäusewandung ausgebildet.

Der erfindungsgemäße Solarkollektor, insbesondere der Solarflachkollektor, umfassend einen Solarkollektorgrundkörper mit einem Solarkollektorgehäuse und einem darin angeordneten, durchströmbaren Absorber und eine an den Absorber angrenzende Abdeckplatte, ist dadurch gekennzeichnet, dass der Solarkollektorgrundkörper gemäß dem erfindungsgemäßen Solarkollektorgrundkörper gemäß dem Vorstehenden ausgebildet ist. Insbesondere sieht eine Ausführungsform des erfindungsgemäßen Solarkollektors vor, dass mindestens eine der mit einem Solarfluid kontaktierbaren Oberflächen solarfluiddicht ausgebildet ist.

Das Verfahren zur Herstellung eines erfindungsgemäßen Solarkollektors mit einem Solarkollektorgehäuse und einem darin angeordneten, durchströmbaren Absorber, ist dadurch gekennzeichnet, dass das Solarkollektorgehäuse und zumindest ein Teil des Absorbers durch Urformen als integriertes Bauteil hergestellt werden. Ein Ausführungsbeispiel des Verfahrens sieht vor, dass Solarfluid kontaktierende Oberflächen abgedichtet werden. Das Abdichten kann mittels Infiltrieren, Ausgießen, Tauchen, Sprühen und dergleichen erfolgen. Bevorzugt wird das Infiltrieren mit sogenannten Linern durchgeführt.

Bei einer alternativen Ausführungsform des Verfahrens ist vorgesehen, bereits im ersten Prozessschritt des Schäumens den Liner einzubringen. Als Liner-Werkstoff kommen unter anderem Stoffe auf Epoxid-Basis in Frage. Neben der typischerweise flüssigen Form dieser Stoffe können diese auch als Schäume verarbeitet werden. So wird dazu zunächst der Hauptwerkstoff, vorzugsweise Polyurethan, in der gewünschten Menge und Stärke in das offene Werkzeug eingebracht. Entweder wird auf das noch flüssige, noch nicht ausreagierte Polyurethan dann der ebenfalls flüssige Liner-Werkstoff in einer dünnen Schicht aufgebracht, oder es kann der Liner-Werkstoff auch auf die andere, freie Werkzeughälfte aufgebracht werden. Das Werkzeug wird danach geschlossen. In der anschließenden Schäumphase reagieren beide Werkstoffe aus und bilden einen festen Werkstoffverbund. Nachdem beide Werkstoffe sich während der Reaktion ausdehnen, kommt es zu einer Vermischung an der Grenzfläche zwischen Polyurethan und Liner-Werkstoff, so dass sich ein quasi übergangsloser Werkstoffverbund und folglich eine guten Haftung zwischen den beiden Werkstoffen ergibt. Das derart, in nur einem Prozessschritt, produzierte Gehäuse weißt nun auf der Oberfläche eine durchgängige Linerschicht auf, welche den Polyurethan-Werkstoff vor Wasser und Hitze schützt. In Abhängigkeit der zu erwartenden Temperaturbelastung lässt sich die Dicke der Linerschicht variieren. Als Hauptwerkstoff können generell auch andere isolierende Schäume oder nicht schäumende Werkstoffe eingesetzt werden. Auch darauf ist das erfindungsgemäße Verfahren anwendbar.

Mit dem erfindungsgemäßen Solarkollektorgrundkörper, dem erfindungsgemäßen Solarkollektor und dem erfindungsgemäßen Herstellverfahren werden bedeutende Vorteile realisiert. Durch die integrierte Bauweise ist ein kompakter Aufbau möglich, welche die Herstellung von sehr flachen Kollektoren ermöglicht. Weiterhin lassen sich durch die integrierte Bauweise bis zu 50 % des im Stand der Technik benötigten Absorbermaterials einsparen.

Darüber hinaus lassen sich erfindungsgemäße Flachkollektoren mit nur etwa sechs wesentlichen Fertigungsschritten herstellen: Zuerst wird der Solarkollektorgrundkörper mittels eines geeigneten Materials wie beispielsweise Polyurethan geschäumt. Hierbei wird der Solarkollektorgrundkörper mittels des Polyurethanschäumverfahrens hergestellt. Dazu werden in ein hierfür erforderliches Werkzeug, genauer ein Werkzeugunterteil, für das Solarkollektorgehäuse Halterungen, Kollektorbefestigungen, Sensoren, Leitungen und/oder Hydraulikanschlüsse, je nach Ausbildung des Solarkollektors, eingelegt und Polyurethan eingebracht. Eine Werkzeugoberseite, oder genauer ein Werkzeugoberteil, ist als Negativform der Kanäle, eines Verteilerbereichs und/oder eines Sammlerbereichs ausgebildet, in welchen mehrere Kanäle zum Beispiel zusammen- oder auseinanderlaufen. Die Strukturen lassen sich in beliebigen dreidimensionalen Strukturen ausbilden. Die Werkzeuge werden für das Verfahren entsprechend aufeinander gefahren, so dass das Polyurethan bei geschlossenem Werkzeug aushärten kann.

In einem weiteren Schritt werden entsprechende solarfluidkontaktierende Gehäuseober- oder -innenflächen infiltriert oder ausgegossen, das heißt gegen das Solarfluid abgedichtet. Dieser Schritt ist optional und unter anderem von dem eingesetzten Fluid abhängig. Damit das Polyurethan über die gesamte Lebensdauer solarfluid- bzw. wasserresistent bleibt, werden bevorzugt alle solarfluidkontaktierenden Oberflächen in dem Solarkollektorgehäuse mit einem Liner oder dergleichen infiltriert und/oder überzogen. Der Liner oder ein vergleichbarer Stoff kann zum Beispiel aufgesprüht, dosiert oder in einem Tauchverfahren aufgebracht werden.

In einem anderen Schritt erfolgt das Auftragen eines adhäsiven Mittels, zum Beispiel eines Klebstoffes. Hierbei wird an allen Auflageflächen zwischen der Absorberplatte und dem Solarkollektorgrundkörper, sowie auf den Auflageflächen zwischen einem Abdeckglas und dem Solarkollektorgehäuse Klebstoff aufgetragen oder dosiert. Der Klebstoff kann auf den Gehäuse- oder Grundkörperflächen, der Absorberplatte und/oder dem Abdeckglas aufgebracht werden.

Ein weiterer Schritt sieht vor, dass die Absorberplatte in oder auf den Solarkollektorgrundkörper aufgelegt wird. Hierdurch werden zum Beispiel die umfänglichen Öffnungen der Fluidkanäle des Absorbers verschlossen. Ein anderer Schritt sieht vor, dass nach dem Anordnen der Absorberplatte die Glasabdeckung an dem Solarkollektorgrundkörper angeordnet wird. Nicht zuletzt erfolgt ein Aushärteprozess, in dem der Liner und/oder die Klebeverbindungen aushärten.

Während dieser im Wesentlichen sechs vorteilhaften Fertigungsschritte wird durch die integrierte Bauweise die Fluidführung in das Kollektorgehäuse integriert. Hierdurch lässt sich unter anderem auch eine gleichmäßige Fluidströmung realisieren. Darüber hinaus ist auch eine Fluidströmung mit geringen Druckverlusten durch entsprechende Ausbildung von dreidimensionalen Ein- und Auslaufstrecken realisierbar. Zudem lässt sich das Verfahren sehr gut automatisieren, so dass der Solarkollektorgrundkörper und/oder der Solarkollektor sich in Serienfertigung automatisiert herstellen lässt.

Die Zeichnung stellt ein Ausführungsbeispiel der Erfindung dar. Es zeigt:
- Fig. 1:: schematisch einen Querschnitt durch eine Ausführungsform eines erfindungsgemäßen Solarkollektors und
- Fig. 2:: den schematisch vereinfachten Verfahrensablauf zur Herstellung eines Solarkollektorgehäuses.

Der Solarkollektor 1 umfasst einen Solarkollektorgrundkörper 2, der wiederum ein Solarkollektorgehäuse 3 und einen Absorber 4 umfasst, eine Absorberplatte 5 sowie eine Glasabdeckung 6. Das Solarkollektorgehäuse 3 ist becherförmig mit einem Boden 3a und einer Wandung 3b ausgebildet. Der Boden 3a ist vorzugsweise plattenförmig ausgebildet mit einer in einer Draufsicht im Wesentlichen rechteckigen Kontur. Am Rand des Bodens 3a erhebt sich die Wandung 3b, die vorliegend als umlaufender Rahmen ausgebildet ist. Der Rahmen weist in einem oberen Teil 3c einen inneren Absatz 3d auf, an welchem die Glasabdeckung 6 aufgenommen werden kann.

Der Absorber 4 ist teilweise integriert mit dem Solarkollektorgehäuse 3 ausgebildet. In der dargestellten Figur umfasst der Absorber 4 Fluidkanäle 7, durch welche ein Solarfluid strömen kann. Die Fluidkanäle 7 erstrecken sich in die Längsrichtung des Solarkollektors 1, weisen einen etwa rechteckigen Querschnitt in der Figur auf und sind integriert, das heißt einteilig mit dem Solarkollektorgehäuse 3 ausgebildet. Die Fluidkanäle 7 sind umfänglich teilweise geöffnet. Es ist also eine Umfangsöffnung 8 je Fluidkanal 7 an dessen Umfang vorgesehen. Bevorzugt weitet sich der Fluidkanal 7 in die Richtung zur Umfangsöffnung 8, so dass der Solarkollektorgrundkörper 2 urformtechnisch optimiert ausgebildet ist.

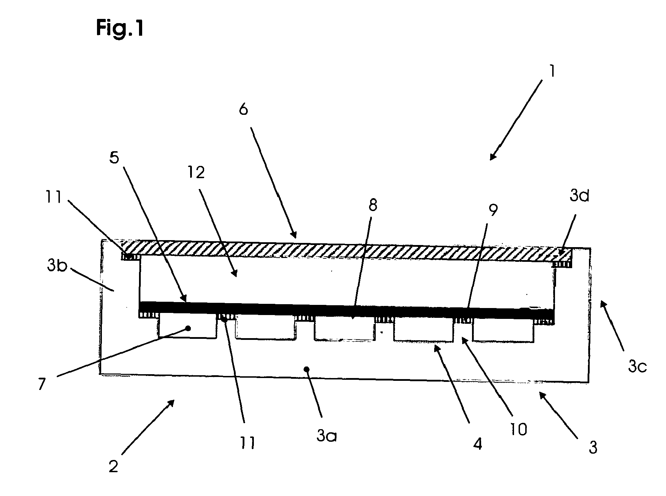

Die Fluidkanäle 7 des Absorbers 4, genauer die Umfangsöffnungen 8, sind mittels der Absorberplatte 5 abgedichtet. Diese Absorberplatte 5 ist in der Fig. 1 als ebene Abdeckplatte ausgeführt. Um eine optimale Abdichtung der Fluidkanäle 7 zu ermöglichen, sind Auflageflächen 9, welche durch eine Fluidkanalwandung 10 und die daran angrenzende Umfangsöffnung 8 definiert sind, plan und/oder eben ausgebildet, um eine optimale Auflage für die Absorberplatte 5 zu ermöglichen. Über die Auflageflächen 9 ist die Absorberplatte 5 mittels eines adhäsiven Mittels 11, wie zum Beispiel einem Kleber, an dem Absorber 4 befestigt. Dabei ist das adhäsive Mittel 11 auf den Auflageflächen 9 aufgebracht, so dass dieses als Zwischenschicht zwischen dem Absorber 4 und der Absorberplatte 5 fungiert. Bevorzugt ist die Absorberplatte 5 so ausgebildet, dass sie von dem Rahmen des Solarkollektorgehäuses 3 eingefasst, das heißt seitlich anliegend umgrenzt ist.

Die Glasabdeckung 6 ist ebenfalls plattenförmig ausgebildet. Durch den Absatz 3d ist eine Auflagefläche für die Glasabdeckung 6 gebildet, so dass die Glasabdeckung 6 von dem Rahmen eingefasst ist. Sie ist beabstandet zu der Absorberplatte 5 ausgebildet, so dass ein Zwischenraum 12 zwischen Absorberplatte 5, Solarkollektorgehäuse 3 und Glasabdeckung 6 gebildet wird. Entsprechend ist der Absatz 3d beabstandet von dem Boden 3a ausgebildet. Zwischen dem Absatz 3d und der Glasabdeckung 6 ist ebenfalls ein adhäsives Mittel 11 angeordnet, um die Glasabdeckung 6 fest mit dem Solarkollektorgehäuse 3 zu verbinden.

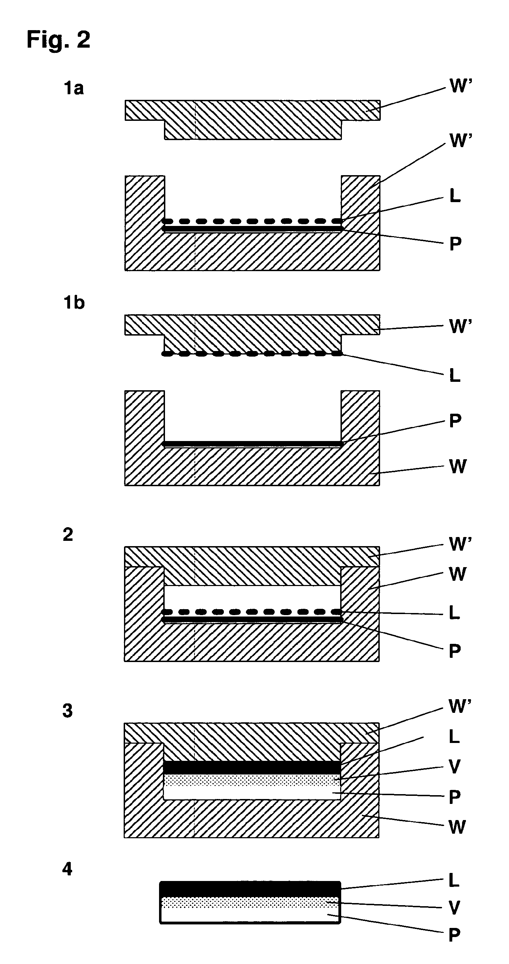

Gemäß Fig. 2 wird bereits im ersten Prozessschritt 1a des Schäumens der Liner-Werkstoff L in der gewünschten Menge und Stärke in das offene Werkzeugunterteil W und auf den dort befindlichen Polyurethan-Werkstoff P aufgebracht. Alternativ dazu kann im Prozessschritt 1 b der Liner-Werkstoff L auch auf das geöffnete Werkzeugoberteil W' aufgebracht werden.

Das Werkzeug W, W' wird danach im Prozessschritt 2 geschlossen. In der anschließenden Schäumphase reagieren beide Werkstoffe aus und bilden einen festen Werkstoffverbund. Dabei kommt es zu einer Vermischung an der Grenzfläche zwischen Polyurethan-Werkstoff P und Liner-Werkstoff L. Es bildet sich dort ein quasi übergangsloser Werkstoffverbund V aus. Das gemäß Prozessschritt 4 fertige Solarkollektorgehäuse 3 weißt nun auf der Oberfläche eine durchgängige Schicht des Liner-Werkstoffes L auf, welche den geschäumten Polyurethan-Werkstoff P vor Feuchtigkeits- und Temperatureinflüssen schützt.

## Patentansprüche

1. Solarkollektorgrundkörper (2), insbesondere ein Solarkollektorgrundkörper (2) für einen Solarflachkollektor (1), umfassend ein Solarkollektorgehäuse (3) und einen in dem Solarkollektorgehäuse (3) angeordneten Absorber (4), wobei der Absorber (4) von einem Solarfluid durchströmbar ist,
**dadurch gekennzeichnet, dass** der Absorber (4) zumindest teilweise integriert mit dem Solarkollektorgehäuse (3) ausgebildet ist.

2. Solarkollektorgrundkörper (2) nach Anspruch 1,
**dadurch gekennzeichnet, dass** das Solarkollektorgehäuse (3) und zumindest der integriert ausgebildete Teil des Absorbers (4) mittels eines Urformverfahrens hergestellt sind.

3. Solarkollektorgrundkörper (2) nach Anspruch 1 oder 2,
**dadurch gekennzeichnet, dass** der mit dem Solarkollektorgehäuse (3) integriert ausgebildete Teil des Absorbers (4) als mindestens ein Fluidkanal (7) mit zumindest einer Umfangsöffnung (8) ausgeformt ist, so dass dieser als umfänglich zumindest teilweise offener Fluidkanal (7) ausgebildet ist.

4. Solarkollektorgrundkörper (2) nach einem der Ansprüche 1 bis 3,
**dadurch gekennzeichnet, dass** die Umfangsöffnung (8) etwa bündig in einer Ebene an eine Wandung (10) des Fluidkanals (7) unter Bildung von einer Auflagefläche (9) angrenzt, so dass der Fluidkanal(7) mittels einer ebenen Abdeckplatte (5) umfänglich verschließbar ist.

5. Solarkollektorgrundkörper (2) nach einem der Ansprüche 1 bis 4,
**dadurch gekennzeichnet, dass** der Solarkollektorgrundkörper (2) etwa becherförmig mit einem Gehäuseboden (3a), einer Gehäusewandung (3b) und einem von dem Gehäuseboden (3a) und der Gehäusewandung (3b) aufgespannten Innenraum ausgebildet ist.

6. Solarkollektorgrundkörper (2) nach einem der Ansprüche 1 bis 5,
**dadurch gekennzeichnet, dass** der Absorber (4) in dem Gehäuseinnenraum ausgebildet ist.

7. Solarkollektor (1), insbesondere ein Solarflachkollektor, umfassend einen Solarkollektorgrundkörper (2) mit einem Solarkollektorgehäuse (3) und einem darin angeordneten, durchströmbaren Absorber (4) und eine an den Absorber (4) angrenzende Abdeckplatte (5),
**dadurch gekennzeichnet, dass** der Solarkollektorgrundkörper (2) nach einem der vorherigen Ansprüche 1 bis 7 ausgebildet ist.

8. Solarkollektor (1) nach Anspruch 7,
**dadurch gekennzeichnet, dass** mindestens eine der mit einem Solarfluid kontaktierbaren Oberflächen solarfluiddicht ausgebildet ist.

9. Verfahren zur Herstellung eines Solarkollektors (1) mit einem Solarkollektorgehäuse (3) und einem darin angeordneten, durchströmbaren Absorber (4),
**dadurch gekennzeichnet, dass** das Solarkollektorgehäuse (3) und zumindest ein Teil des Absorbers (4) durch Umformen als integriertes Bauteil hergestellt werden.

10. Verfahren nach Anspruch 9,
**dadurch gekennzeichnet, dass** Solarfluid kontaktierende Oberflächen mittels Infiltrieren, Tauchen, Sprühen oder Ausgießen abgedichtet werden.

11. Verfahren nach Anspruch 9,
**dadurch gekennzeichnet, dass** im ersten Prozessschritt des Schäumens Solarfluid kontaktierende Oberflächen abgedichtet werden, indem ein Liner-Werkstoff (L) eingebracht wird.

12. Verfahren nach den Ansprüchen 9 und 11,
**dadurch gekennzeichnet, dass** zum Einbringen des Liners zunächst der Polyurethan-Werkstoff (P) als Hauptwerkstoff in der gewünschten Menge und Stärke in das offene Werkzeug (W, W') eingebracht wird, und danach auf den noch flüssigen, noch nicht ausreagierten Polyurethan-Werkstoff (P) der flüssige Liner-Werkstoff (L) in einer dünnen Schicht aufgebracht wird.

13. Verfahren nach den Ansprüchen 9 und 11,
**dadurch gekennzeichnet, dass** zum Einbringen des Liners der Linerwerkstoff (L) auf die andere, frei liegende Werkzeughälfte (W') aufgebracht wird, dass das Werkzeug (W, W') dann geschlossen wird, und dass beide Werkstoffe (P, L) in der anschließenden Schäumphase reagieren und einen festen Werkstoffverbund (V) ausbilden.
